# EUROPEAN PATENT APPLICATION

(11) **EP 3 133 739 A1**
(43) Date of publication of application: **22.02.2017**
(21) Application number: 14897786.1
(22) Date of filing: 15.07.2014
(51) Int. Cl.: H04B 1/00

(54) **SIGNAL RECOVER METHOD AND SIGNAL TRANSCEIVER DEVICE**

(71) Applicant: Huawei Technologies Co. Ltd., Shenzhen, Guangdong 518129 (CN)
(72) Inventor: ZHANG, Yi, Shenzhen Guangdong 518129 (CN)
(74) Representative: Pfenning, Meinig & Partner mbB
(86) International application number: PCT/CN2014/082253
(87) International publication number: WO 2016/008098

(57) **Abstract**

According to a signal restoration method and a signal transceiver device provided in embodiments of the present invention, a first signal is converted into an equi-amplitude phase-inverted signal of the first signal, and the equi-amplitude phase-inverted signal of the first signal is used to restore a wanted signal from received signals; or a signal is transmitted by using a transmit antenna if a transmit party for a wanted signal does not transmit the wanted signal, a model of an interference channel is obtained by means of estimation, and a first signal is reconstructed according to the model, so as to restore the wanted signal from received signals. The first signal is an interference signal that is formed from a signal transmitted by the signal transceiver device and causes interference to the wanted signal received by the signal transceiver device. It can be learned that, according to the method and the signal transceiver device in the embodiments, interference caused by the signal transmitted by the signal transceiver device to the wanted signal received by the signal transceiver device can be canceled. Therefore, if one frequency is used to receive and transmit a signal, interference caused by a transmit signal to a receive signal can be avoided after a time interval is shortened or even without a time interval, so that a delay in a communication process can be reduced.

## Description

### TECHNICAL FIELD

The present invention relates to the communications field, and in particular, to a signal restoration method and a signal transceiver device.

### BACKGROUND

If a signal transceiver device uses one frequency to receive and transmit a signal, the signal transceiver device needs to ensure an enough time interval between a time for transmitting a signal and a time for receiving a signal, to avoid interference caused by the signal transmitted by the signal transceiver device to the signal received by the signal transceiver device.

It can be learned that a large delay exists in a communication process if the signal transceiver signal uses one frequency to receive and transmit a signal.

### SUMMARY

Embodiments of the present invention provide a signal restoration method and a signal transceiver device, to resolve a problem that a large delay exists in a communication process if the signal transceiver device uses one frequency to receive and transmit a signal.

To achieve the foregoing objective, the embodiments of the present invention provide the following technical solutions:
A first aspect of the embodiments of the present invention provides a signal restoration method, including:
   converting, by a signal transceiver device, a first signal into an equi-amplitude phase-inverted signal of the first signal, where the first signal is an interference signal that is formed from a signal transmitted by a transmit end of the signal transceiver device and that causes interference to a wanted signal, and the wanted signal is a signal received by a receive end of the signal transceiver device if the transmit end of the signal transceiver device does not transmit a signal; and
   restoring, by the signal transceiver device by using the equi-amplitude phase-inverted signal of the first signal, the wanted signal from signals received by the receive end of the signal transceiver device.

In a first implementation manner of the first aspect of the embodiments of the present invention, the converting, by a signal transceiver device, a first signal into an equi-amplitude phase-inverted signal of the first signal includes:
receiving, by the signal transceiver device, the first signal by using an interference cancellation antenna, where the interference cancellation antenna, and a receive antenna and a transmit antenna of the signal transceiver device constitute a preset position relationship, where the preset position relationship makes the first signal become the equi-amplitude phase-inverted signal of the first signal after the first signal is received through the interference cancellation antenna.

In a second implementation manner of the first aspect of the embodiments of the present invention, if the signal transceiver device has one receive antenna and one transmit antenna, and the receive antenna and the transmit antenna constitute a uniform linear antenna array, the preset position relationship includes:
a first distance exists between the interference cancellation antenna and the transmit antenna, a second distance exists between the interference cancellation antenna and the receive antenna, and a difference between the first distance and the second distance is an odd number of half wavelengths of the transmitted signal.

In a third implementation manner of the first aspect of the embodiments of the present invention, if the signal transceiver device has a first transmit antenna, a second transmit antenna, and the receive antenna, and the first transmit antenna, the second transmit antenna, and the receive antenna constitute a uniform linear antenna array, the preset position relationship includes:
the interference cancellation antenna is placed in an intersection of a first equiphase surface and a second equiphase surface, where a center of sphere of the first equiphase surface is the first transmit antenna, a radius of the first equiphase surface is a sum of a distance between the first transmit antenna and the receive antenna and an odd number of half wavelengths of the transmitted signal, a center of sphere of the second equiphase surface is the second transmit antenna, and a radius of the second equiphase surface is a sum of a distance between the second transmit antenna and the receive antenna and an odd number of half wavelengths of the transmitted signal.

In a fourth implementation manner of the first aspect of the embodiments of the present invention, if the signal transceiver device has the first transmit antenna, the second transmit antenna, a first receive antenna, and a second receive antenna, and the first transmit antenna, the second transmit antenna, the first receive antenna, and the second receive antenna constitute a uniform linear antenna array, the preset position relationship includes:
a first interference cancellation antenna is placed in an intersection of a first equiphase surface and a second equiphase surface, where a center of sphere of the first equiphase surface is the first transmit antenna, a radius of the first equiphase surface is a sum of a distance between the first transmit antenna and the first receive antenna and an odd number of half wavelengths of the transmitted signal, a center of sphere of the second equiphase surface is the second transmit antenna, and a radius of the second equiphase surface is a sum of a distance between the second transmit antenna and the first receive antenna and an odd number of half wavelengths of the transmitted signal; and
a second interference cancellation antenna is placed in an intersection of a third equiphase surface and a fourth equiphase surface, where a center of sphere of the third equiphase surface is the first transmit antenna, a radius of the third equiphase surface is a sum of a distance between the first transmit antenna and the second receive antenna and an odd number of half wavelengths of the transmitted signal, a center of sphere of the fourth equiphase surface is the second transmit antenna, and a radius of the fourth equiphase surface is a sum of a distance between the second transmit antenna and the second receive antenna and an odd number of half wavelengths of the transmitted signal.

In a fifth implementation manner of the first aspect of the embodiments of the present invention, if the signal transceiver device has one receive antenna and one transmit antenna, the preset position relationship includes:
the interference cancellation antenna and the receive antenna of the signal transceiver device constitute a cross polarization antenna.

In a sixth implementation manner of the first aspect of the embodiments of the present invention, if the signal transceiver device has the first transmit antenna, the second transmit antenna, the first receive antenna, and the second receive antenna, and the first transmit antenna and the second transmit antenna constitute a first cross polarization antenna, the preset position relationship includes:
a first interference cancellation antenna and the first receive antenna constitute a second cross polarization antenna, and a second interference cancellation antenna and the second receive antenna constitute a third cross polarization antenna; and
an absolute value of a difference between a first distance and a second distance is an odd number of half wavelengths of the transmitted signal, where the first distance is a distance between a center of the first cross polarization antenna and a center of the second cross polarization antenna, and the second distance is a distance between the center of the first cross polarization antenna and a center of the third cross polarization antenna.

In a seventh implementation manner of the first aspect of the embodiment of the present invention, the converting, by a signal transceiver device, a first signal into an equi-amplitude phase-inverted signal of the first signal includes:
delaying, by the signal transceiver device, the first signal by a preset time to form the equi-amplitude phase-inverted signal of the first signal, where the preset time is determined by dividing a distance value by a speed of light, and the distance value is a value of a distance between a transmit antenna of the signal transceiver device and a receive antenna of the signal transceiver device.

A second aspect of the embodiments of the present invention provides a signal restoration method, including:
transmitting, by a transmit end of a signal transceiver device, a signal in a first timeslot by using a transmit antenna, where a transmit party for the wanted signal does not transmit the wanted signal in the first timeslot;
receiving, by a receive end of the signal transceiver device, a reference signal formed after the transmitted signal is transmitted through an interference channel;
estimating, by the signal transceiver device, a model of the interference channel according to the reference signal;
reconstructing, by the signal transceiver device, a first signal according to the model of the interference channel, where the first signal is an interference signal that is formed from the signal transmitted by the transmit end of the signal transceiver device and that causes interference to the wanted signal; and
restoring, by the signal transceiver device by using the reconstructed first signal, the wanted signal from signals received by the receive end of the signal transceiver device.

In a first implementation manner of the second aspect of the embodiments of the present invention, the restoring, by the signal transceiver device by using the reconstructed first signal, the wanted signal from signals received by the receive end of the signal transceiver device includes:
obtaining the wanted signal by subtracting the reconstructed first signal from the signals received by the receive end of the signal transceiver device.

A third aspect of the embodiments of the present invention provides a signal transceiver device, including:
a signal converter, configured to convert a first signal into an equi-amplitude phase-inverted signal of the first signal, where the first signal is an interference signal that is formed from a signal transmitted by a transmit end of the signal transceiver device and that causes interference to a wanted signal, and the wanted signal is a signal received by a receive end of the signal transceiver device if the transmit end of the signal transceiver device does not transmit a signal; and
a combiner unit, configured to restore, by using the equi-amplitude phase-inverted signal of the first signal, the wanted signal from signals received by the receive end of the signal transceiver device.

In a first implementation manner of the third aspect of the embodiments of the present invention, the signal converter includes:
an interference cancellation antenna that constitutes a preset position relationship together with a receive antenna and a transmit signal of the signal transceiver device, configured to receive the first signal, where the preset position relationship makes the first signal become the equi-amplitude phase-inverted signal of the first signal after the first signal is received through the interference cancellation antenna.

In a second implementation of the third aspect of the embodiments of the present invention, if the signal transceiver device has one receive antenna and one transmit antenna, and the receive antenna and the transmit antenna constitute a uniform linear antenna array, a first distance exists between the interference cancellation antenna and the transmit antenna, a second distance exists between the interference cancellation antenna and the receive antenna, and a difference between the first distance and the second distance is an odd number of half wavelengths of a transmit signal.

In a third implementation manner of the third aspect of the embodiments of the present invention, if the signal transceiver device has a first transmit antenna, a second transmit antenna, and the receive antenna, and the first transmit antenna, the second transmit antenna, and the receive antenna constitute a uniform linear antenna array, the interference cancellation antenna is placed in an intersection of a first equiphase surface and a second equiphase surface, where a center of sphere of the first equiphase surface is the first transmit antenna, a radius of the first equiphase surface is a sum of a distance between the first transmit antenna and the receive antenna and an odd number of half wavelengths of the transmitted signal, a center of sphere of the second equiphase surface is the second transmit antenna, and a radius of the second equiphase surface is a sum of a distance between the second transmit antenna and the receive antenna and an odd number of half wavelengths of the transmitted signal.

In a fourth implementation manner of the third aspect of the embodiments of the present invention, if the signal transceiver device has a first transmit antenna, a second transmit antenna, a first receive antenna, and a second receive antenna, and the first transmit antenna, the second transmit antenna, the first receive antenna, and the second receive antenna constitute a uniform linear antenna array, a first interference cancellation antenna is placed in an intersection of a first equiphase surface and a second equiphase surface, where a center of sphere of the first equiphase surface is the first transmit antenna, a radius of the first equiphase surface is a sum of a distance between the first transmit antenna and the receive antenna and an odd number of half wavelengths of the transmitted signal, a center of sphere of the second equiphase surface is the second transmit antenna, and a radius of the second equiphase surface is a sum of a distance between the second transmit antenna and the receive antenna and an odd number of half wavelengths of the transmitted signal; and
a second interference cancellation antenna is placed in an intersection of a third equiphase surface and a fourth equiphase surface, where a center of sphere of the third equiphase surface is the first transmit antenna, a radius of the third equiphase surface is a sum of a distance between the first transmit antenna and the second receive antenna and an odd number of half wavelengths of the transmitted signal, a center of sphere of the fourth equiphase surface is the second transmit antenna, and a radius of the fourth equiphase surface is a sum of a distance between the second transmit antenna and the second receive antenna and an odd number of half wavelengths of the transmitted signal.

In a fifth implementation manner of the third aspect of the embodiments of the present invention, if the signal transceiver device has one receive antenna and one transmit antenna, the interference cancellation antenna and the receive antenna of the signal transceiver device constitute a cross polarization antenna.

In a sixth implementation manner of the third aspect of the embodiments of the present invention, if the signal transceiver device has the first transmit antenna, the second transmit antenna, the first receive antenna, and the second transmit antenna, and the first transmit antenna and the second transmit antenna constitute a first cross polarization antenna, the first interference cancellation antenna and the first receive antenna constitute a second cross polarization antenna, and the second interference cancellation antenna and the second receive antenna constitute a third cross polarization antenna; and
an absolute value of a difference between a first distance and a second distance is an odd number of half wavelengths of the transmitted signal, where the first distance is a distance between a center of the first cross polarization antenna and a center of the second cross polarization antenna, and the second distance is a distance between the center of the first cross polarization antenna and a center of the third cross polarization antenna.

In a seventh implementation manner of the third aspect of the embodiments of the present invention, the signal converter includes:
a delayer, configured to delay the first signal by a preset time to form the equi-amplitude phase-inverted signal of the first signal, where the preset time is determined by dividing a distance value by a speed of light, and the distance value is a value of a distance between a transmit antenna of the signal transceiver device and a receive antenna of the signal transceiver device.

A fourth aspect of the embodiments of the present invention provides a signal transceiver device, including:
a transmit unit, transmitting a signal in a first timeslot by using a transmit antenna, where a transmit party for the wanted signal does not transmit the wanted signal;
a channel model estimation unit, configured to receive a reference signal formed after the signal transmitted by using the transmit antenna is transmitted through an interference channel, and estimate a model of the interference channel according to the reference signal;
a reconstruction unit, configured to reconstruct a first signal according to the model of the interference channel, where the first signal is an interference signal that is formed from the signal transmitted by a transmit end of the signal transceiver device and that causes interference to the wanted signal; and
a restoration unit, configured to restore, by using the reconstructed first signal, the wanted signal from signals received by a receive end of the signal transceiver device.

In a first implementation manner of the fourth aspect of the embodiments of the present invention, that a restoration unit is configured to restore, by using the reconstructed first signal, the wanted signal from signals received by a receive end of the signal transceiver device includes:
the restoration unit is specifically configured to obtain the wanted signal by subtracting the reconstructed first signal from the signals received by the receive end of the signal transceiver device.

A fifth aspect of the embodiments of the present invention provides a signal transceiver device, including:
a transmitter, configured to transmit a signal in a first timeslot by using a transmit antenna, where a transmit party for the wanted signal does not transmit the wanted signal in the first timeslot; and
a processor, configured to: receive a reference signal formed after the signal transmitted by using the transmit antenna is transmitted through an interference channel; estimate a model of the interference channel according to the reference signal; reconstruct a first signal according to the model of the interference channel, where the first signal is an interference signal that is formed from the signal transmitted by the signal transceiver device and that causes interference to the wanted signal; and restore, by using the reconstructed first signal, the wanted signal from signals received by a receive end of the signal transceiver device.

According to the signal restoration method and the signal transceiver device provided in the embodiments of the present invention, a first signal is converted into an equi-amplitude phase-inverted signal of the first signal, and the equi-amplitude phase-inverted signal of the first signal is used to restore a wanted signal from received signals; or a signal is transmitted by using a transmit antenna if a transmit party for a wanted signal does not transmit the wanted signal, so as to estimate a model of an interference channel, a first signal is reconstructed according to the model of the interference channel, and the wanted signal is restored from received signals according to the first signal. The first signal is an interference signal that is formed from a signal transmitted by the signal transceiver device and that causes interference to the wanted signal received by the signal transceiver device. It can be learned that, according to the method and signal transceiver device in the embodiments of the present invention, interference caused by the signal transmitted by the signal transceiver device to the wanted signal received by the signal transceiver device can be canceled when a signal is being received and transmitted at the same time. Therefore, if one frequency is used to receive and transmit a signal, interference caused by a transmit signal to a receive signal may be canceled after a time interval is shortened or even without a time interval, so that a delay in a communication process can be reduced.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic structural diagram of an existing signal transceiver device;
FIG. 2 is a schematic structural diagram of a signal transceiver device disclosed in an embodiment of the present invention;
FIG. 3 is a schematic diagram of a position of an interference cancellation antenna of a signal transceiver device disclosed in an embodiment of the present invention;
FIG. 4 is a schematic diagram of another position of an interference cancellation antenna of a signal transceiver device disclosed in an embodiment of the present invention;
FIG. 5 is a schematic diagram of a principle of determining the position of the interference antenna shown in FIG. 4;
FIG. 6 is a schematic diagram of still other positions of interference cancellation antennas of a signal transceiver device disclosed in an embodiment of the present invention;
FIG. 7 is a schematic diagram of a principle of determining the positions of the interference antennas shown in FIG. 6;
FIG. 8 is a schematic diagram of yet another position of an interference cancellation antenna of a signal transceiver device disclosed in an embodiment of the present invention;
FIG. 9 is a schematic diagram of still yet other positions of interference cancellation antennas of a signal transceiver device disclosed in an embodiment of the present invention;
FIG. 10 is a schematic structural diagram of a signal transceiver device disclosed in an embodiment of the present invention;
FIG. 11 is a schematic structural diagram of still another signal transceiver device disclosed in an embodiment of the present invention;
FIG. 12 is a flowchart of a signal restoration method disclosed in an embodiment of the present invention; and
FIG. 13 is a flowchart of another signal restoration method disclosed in an embodiment of the present invention.

### DESCRIPTION OF EMBODIMENTS

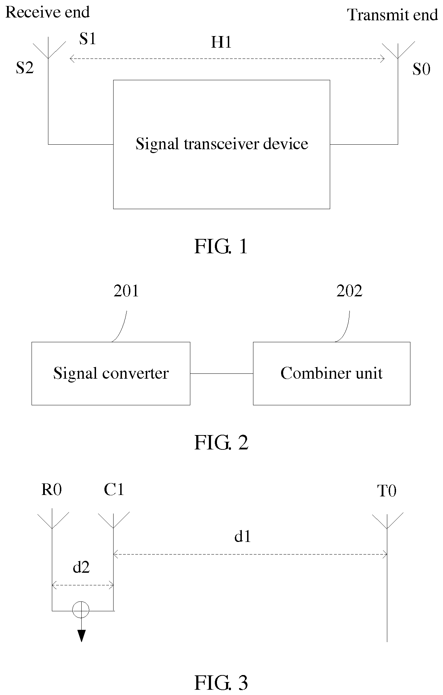

The signal restoration method described in embodiments of the present invention may be applied on a signal transceiver device. As shown in FIG. 1, the signal transceiver device has a transmit end and a receive end, the transmit end is configured to transmit a signal, and the receive end is configured to receive a signal. When the signal transceiver device transmits a signal S0, the transmitted signal S0 becomes an S1 after passing through a channel H1, and the S1 may be received by the receive end. It is assumed that when the signal S0 is transmitted, the receive end is receiving a signal S2. The receive end may eventually receive signals S1+S2.

The signal transceiver device may work in a standard such as a Global System for Mobile Communications (Global System for Mobile communication, GSM), Long Term Evolution (Long Term Evolution, LTE), or a Universal Mobile Telecommunications System (Universal Mobile Telecommunications System, UMTS), which is not limited in the embodiments of the present invention.

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

As shown in FIG. 2, an embodiment of the present invention discloses a signal transceiver device, including:
a signal converter 201, configured to convert a first signal into an equi-amplitude phase-inverted signal of the first signal, where the first signal is an interference signal that is formed from a signal transmitted by a transmit end of the signal transceiver device and that causes interference to a wanted signal; and
a combiner unit 202, configured to restore, by using the equi-amplitude phase-inverted signal of the first signal, the wanted signal from signals received by a receive end of the signal transceiver device.

The wanted signal is a signal received by the receive end of the signal transceiver device when the transmit end of the signal transceiver device does not transmit a signal, and the wanted signal is usually sent by another device to the signal transceiver device.

Generally, a combiner unit is a hardware structure having the following function: after the equi-amplitude phase-inverted signal of the first signal is formed, the equi-amplitude phase-inverted signal of the first signal is added to signals received by a receive antenna, so as to restore the wanted signal that the signal transceiver device needs to receive. For example, in FIG. 1, the S1 is an interference signal, when receiving S1+S2, the signal transceiver device further receives an equi-amplitude phase-inverted signal -S1 of the S1 at the same time, and S1+S2+(-S1)=S2.

For a signal transceiver device, power of a transmit signal S0 is much greater than power of a receive signal S2; therefore, an S1 greatly interferes with the S2. It can be learned from the foregoing description that, according to the method described in this embodiment, interference caused by a transmit signal of a signal transceiver device to a wanted signal received by the same signal transceiver device can be canceled. Therefore, the signal transceiver device can use one frequency to receive and transmit a signal at the same time after a time interval is shortened or even without protection of a time interval, which can reduce a delay in a communication process.

In addition, when the signal transceiver device uses different frequencies to receive and transmit a signal at the same time, because the signal transceiver device can avoid interference caused by a transmit signal to a receive signal, there is no need to use a large frequency protection interval for a receive or transmit frequency to avoid the interference, thereby increasing frequency spectrum utilization.

In the foregoing embodiment, the signal converter may be an interference cancellation antenna or a delayer, and the following separately describes the two cases.

A signal transceiver device disclosed in another embodiment of the present invention includes:
an interference cancellation antenna, configured to receive the first signal, where the interference cancellation antenna, and a receive antenna and a transmit antenna of the signal transceiver device constitute a preset position relationship, and the preset position relationship makes the first signal become an equi-amplitude phase-inverted signal of the first signal after the first signal is received through the interference cancellation antenna; and
a combiner unit, configured to restore, by using the equi-amplitude phase-inverted signal of the first signal, the wanted signal from signals received by the receive end of the signal transceiver device.

In this embodiment, specifically, the position relationship between the interference cancellation antenna, the receive antenna, and the transmit antenna may include the following several cases:
First, as shown in FIG. 3, if the signal transceiver device has a transmit antenna T0 and a receive antenna R0, and the T0 and the R0 constitute a uniform linear antenna array, a first distance d1 exists between the interference cancellation antenna C1 and the transmit antenna, a second distance d2 exists between the interference cancellation antenna and the receive antenna, and a difference between the first distance and the second distance is an odd number of half wavelengths of a transmit signal.

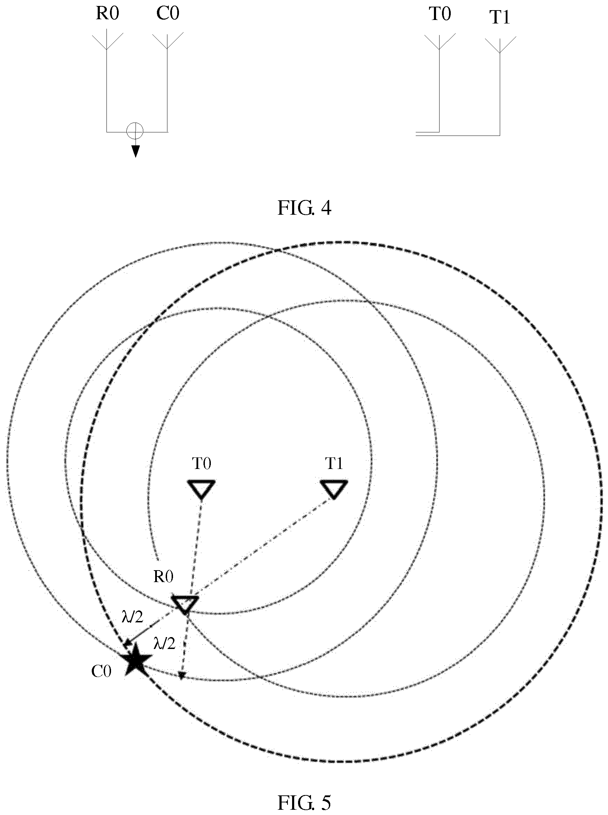

Second, as shown in FIG. 4, if the signal transceiver device has a first transmit antenna T0, a second transmit antenna T1, and a receive antenna R0, and the T0, the T1, and the R0 constitute a uniform linear antenna array, the interference cancellation antenna C0 is placed in an intersection of a first equiphase surface and a second equiphase surface. A center of sphere of the first equiphase surface is the T0, and a radius of the first equiphase surface is a sum of a distance between the T0 and the R0 and an odd number of half wavelengths of a transmit signal. A center of sphere of the second equiphase surface is the T1, and a radius of the second equiphase surface is a sum of a distance between the T1 and the R0 and an odd number of half wavelengths of the transmitted signal. In FIG. 1, one half wavelength λ/2 is used as an example. A pentagram represents a position in which the interference cancellation antenna is placed. FIG. 5 is a schematic diagram of determining the position of the interference antenna.

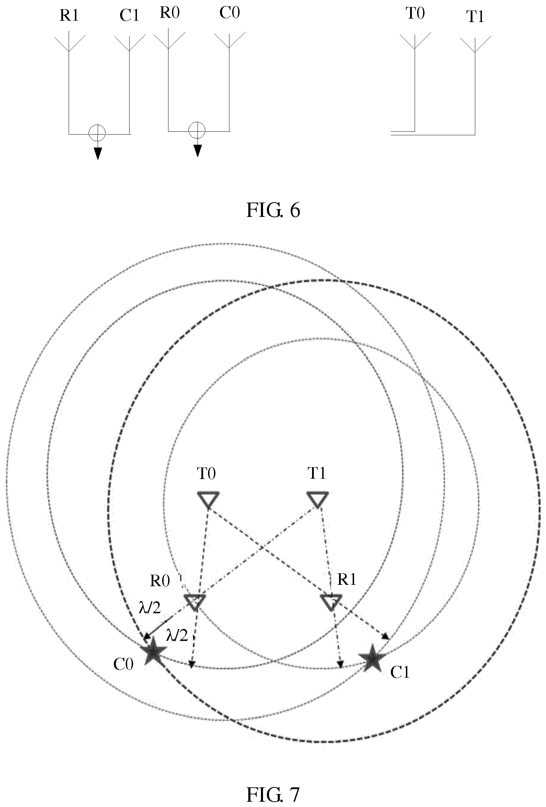

Third, as shown in FIG. 6, the signal transceiver device has a first transmit antenna T0, a second transmit antenna T1, a first receive antenna R0, and a second receive antenna R1, the T0, the T1, the R0, and the R1 constitute a uniform linear antenna array, and a first interference cancellation antenna C0 is placed in an intersection of a first equiphase surface and a second equiphase surface. A center of sphere of the first equiphase surface is the T0, a radius of the first equiphase surface is a sum of a distance between the T0 and the R0 and an odd number of half wavelengths of a transmit signal. A center of sphere of the second equiphase surface is the T1, and a radius of the second equiphase surface is a sum of a distance between the T1 and the R0 and an odd number of half wavelengths of the transmitted signal.

A second interference cancellation antenna C1 is placed in an intersection of a third equiphase surface and a fourth equiphase surface. A center of sphere of the third equiphase surface is the T0, a radius of the third equiphase surface is a sum of a distance between the T0 and the R1 and an odd number of half wavelengths of the transmitted signal. A center of the fourth equiphase surface is the T1, and a radius of the fourth equiphase surface is a distance between the T1 and the R1 and an odd number of half wavelengths of the transmitted signal. FIG. 7 is a schematic diagram of determining the positions of the interference antennas.

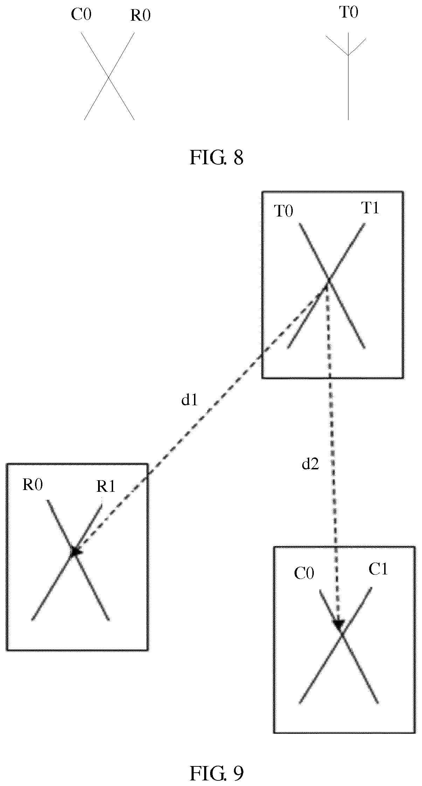

Fourth, as shown in FIG. 8, if the signal transceiver device has a receive antenna R0 and a transmit antenna T0, the interference cancellation antenna C0 and the R0 constitute a cross polarization antenna.

Fifth, as shown in FIG. 9, if the signal transceiver device has a first transmit T0, a second transmit antenna T1, a first receive antenna R0, and a second receive antenna R1, and the T0 and the T1 constitute a first cross polarization antenna, a first interference cancellation antenna C0 and the R0 constitute a second cross polarization antenna, and a second interference cancellation antenna C1 and the R1 constitute a third cross polarization antenna.

In FIG. 9, an absolute value of a difference between a first distance d1 and a second distance d2 is an odd number of half wavelengths of a transmit signal. d1 is a distance between a center of the first cross polarization antenna and a center of the second cross polarization antenna, and d2 is a distance between the center of the first cross polarization antenna and a center of the third cross polarization antenna.

The device described in this embodiment has an interference cancellation antenna, which can cancel interference caused by a transmit signal to a receive signal.

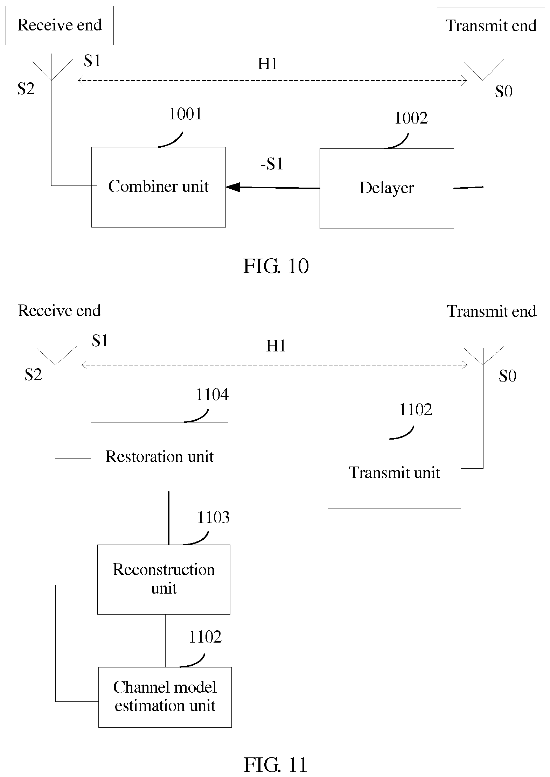

As shown in FIG. 10, a signal transceiver device disclosed in still another embodiment of the present invention includes:
a delayer 1001, forming an equi-amplitude phase-inverted signal of the first signal after the signal transceiver device delays the first signal by a preset time, where the preset time is determined by dividing a distance value by a speed of light, and the distance value is a value of a distance between a transmit antenna of the signal transceiver device and a receive antenna of the signal transceiver device; and
a combiner unit 1002, configured to restore, by using the equi-amplitude phase-inverted signal of the first signal, the wanted signal from signals received by a receive end of the signal transceiver device.

Specifically, a first restoration unit restores the wanted signal S2 by adding the received equi-amplitude phase-inverted signal of the first signal (represented as -S1) to the received signals S1+S2.

In the signal transceiver device of this embodiment, an equi-amplitude phase-inverted signal of a first signal is formed by using a delayer, thereby avoiding interference caused by a transmitted signal to a received signal.

As shown in FIG. 11, a signal transceiver device disclosed in yet another embodiment of the present invention includes:
a transmit unit 1101, configured to transmit a signal in a first timeslot by using a transmit antenna, where a transmit party for a wanted signal does not transmit the wanted signal in the first timeslot;
a channel model estimation unit 1102, configured to: receive a reference signal formed after the signal transmitted by using the transmit antenna is transmitted through an interference channel, and estimate a model of the interference channel according to the reference signal;
a reconstruction unit 1103, configured to reconstruct a first signal according to the model of the interference channel, where the first signal is an interference signal that is formed from the signal transmitted by a transmit end of the signal transceiver device and that causes interference to the wanted signal; and
a restoration unit 1104, configured to restore, by using the reconstructed first signal, the wanted signal from signals received by a receive end of the signal transceiver device.

Specifically, the restoration unit may obtain the wanted signal in a manner of subtracting the reconstructed first signal from the signals received by the receive end of the signal transceiver device.

The signal transceiver device in this embodiment reconstructs an interference signal in a manner of estimating a model of an interference channel, and removes an interference signal from received signals, thereby canceling interference caused by a transmitted signal to a received signal. It can be understood that reference may be made to an existing manner for this embodiment of the present invention, for example, a transmit end of the signal transceiver device transmits a known signal sequence, and a channel model estimation unit of the signal transceiver device receives the known signal sequence, correlates and synchronizes the known signal sequence with a locally stored signal sequence, and filters out a pilot frequency, so as to estimate the model of the interference channel.

It should be noted that the signal transceiver device described in the foregoing embodiment may be specifically a relay device or a repeater device.

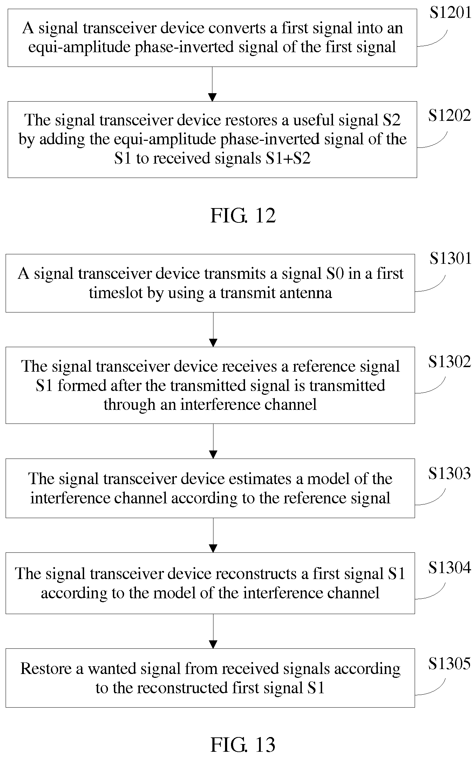

As shown in FIG. 12, a signal restoration method disclosed in an embodiment of the present invention includes:
S1201. A signal transceiver device converts a first signal into an equi-amplitude phase-inverted signal of the first signal.

The first signal is an interference signal that is formed from a signal transmitted by a transmit end of the signal transceiver device and that causes interference to a wanted signal. The wanted signal is a signal received by a receive end of the signal transceiver device if the transmit end of the signal transceiver device does not transmit a signal.

S1202. The signal transceiver device restores a wanted signal S2 by adding the received equi-amplitude phase-inverted signal (represented as -S1) of the first signal to received signals S1+S2.

In this embodiment, a specific implementation manner of S1201 may be as follows:

The signal transceiver device receives the first signal by using an interference cancellation antenna, where the interference cancellation antenna, and a receive antenna and a transmit antenna of the signal transceiver device constitute a preset position relationship, and the preset position relationship makes the first signal become the equi-amplitude phase-inverted signal of the first signal after the first signal is received through the interference cancellation antenna. For the preset position relationship constituted by the interference cancellation antenna, and the receive antenna and the transmit antenna of the signal transceiver device, refer to FIG. 3 to FIG. 9.

Alternatively, the signal transceiver device delays the first signal by a preset time to form the equi-amplitude phase-inverted signal of the first signal, where the preset time is determined by dividing a distance value by a speed of light, and the distance value is a value of a distance between a transmit antenna of the signal transceiver device and a receive antenna of the signal transceiver device. As shown in FIG. 1, the signal transceiver device may receive S1+S2 and the S1D, and because the S1D is an equi-amplitude phase-inverted signal of the S1, the signal transceiver device can remove the interference signal S1 after adding the received signals together. According to the method in this embodiment, interference caused by a transmit signal to a receive signal can be avoided, so that the signal transceiver device can transmit and receive a signal by using one frequency at the same time, thereby saving a frequency spectrum resource and reducing a delay in a process of signal transmitting and receiving.

As shown in FIG. 13, a signal restoration method disclosed in still another embodiment of the present invention includes the following steps:
S1301. A signal transceiver device transmits a signal S0 in a first timeslot by using a transmit antenna.

A transmit party for a wanted signal does not transmit the wanted signal in the first timeslot.

In actual application, the signal transceiver device may be notified of the first timeslot in advance.

S1302. The signal transceiver device receives a reference signal S1 formed after the transmitted signal is transmitted through an interference channel.

S1303. The signal transceiver device estimates a model of the interference channel according to the reference signal.

S1304. The signal transceiver device reconstructs a first signal S1 according to the pre-estimated model of the interference channel.

S1305. Restore a wanted signal from received signals according to the reconstructed first signal S 1.

Specifically, the wanted signal S2 may be restored by subtracting the reconstructed first signal from the received signals S1+S2.

According to the method described in this embodiment, a timeslot in which no wanted signal is received is fully used to obtain a model of an interference signal, so that the interference signal can be reconstructed by using the model of the interference signal in a timeslot in which a wanted signal is received, thereby achieving an objective of canceling an interference signal.

The embodiments of the present invention further disclose a signal transceiver device, including:
a transmitter, configured to transmit a signal in a first timeslot by using a transmit antenna, where a transmit party for a wanted signal does not transmit the wanted signal in the first timeslot; and
a processor, configured to: receive a reference signal formed after the signal transmitted by using the transmit antenna is transmitted through an interference channel; estimate a model of the interference channel according to the reference signal; reconstruct a first signal according to the model of the interference channel, where the first signal is an interference signal that is formed from the signal transmitted by the signal transceiver device and that causes interference to the wanted signal; and restore, by using the reconstructed first signal, the wanted signal from signals received by a receive end of the signal transceiver device.

If the functions of the method in the embodiment are implemented in the form of a software functional unit and sold or used as an independent product, the functions may be stored in a computing device-readable storage medium. Based on such an understanding, the part of the embodiments of the present invention contributing to the prior art or some of the technical solutions may be implemented in a form of a software product. The software product is stored in a storage medium, and includes several instructions for instructing a computing device (which may be a personal computer, a server, or a network device) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The embodiments in this specification are all described in a progressive manner, for same or similar parts in the embodiments, reference may be made to these embodiments, and each embodiment focuses on a difference from other embodiments.

The embodiments disclosed above are described to enable a person skilled in the art to implement or use the present invention. Various modifications to the embodiments are obvious to the person skilled in the art, and general principles defined in this specification may be implemented in other embodiments without departing from the spirit or scope of the present invention. Therefore, the present invention is not intended to be limited to these embodiments illustrated in this specification, but shall be construed in the widest scope consistent with the principles and novel features disclosed in this specification.

## Claims

1. A signal restoration method, comprising:
converting, by a signal transceiver device, a first signal into an equi-amplitude phase-inverted signal of the first signal, wherein the first signal is an interference signal that is formed from a signal transmitted by a transmit end of the signal transceiver device and that causes interference to a wanted signal, and the wanted signal is a signal received by a receive end of the signal transceiver device when the transmit end of the signal transceiver device does not transmit a signal; and
restoring, by the signal transceiver device by using the equi-amplitude phase-inverted signal of the first signal, the wanted signal from signals received by the receive end of the signal transceiver device.

2. The method according to claim 1, wherein the converting, by a signal transceiver device, a first signal into an equi-amplitude phase-inverted signal of the first signal comprises:
receiving, by the signal transceiver device, the first signal by using an interference cancellation antenna, wherein the interference cancellation antenna, and a receive antenna and a transmit antenna of the signal transceiver device constitute a preset position relationship, wherein the preset position relationship makes the first signal become the equi-amplitude phase-inverted signal of the first signal after the first signal is received through the interference cancellation antenna.

3. The method according to claim 2, wherein when the signal transceiver device has one receive antenna and one transmit antenna, and the receive antenna and the transmit antenna constitute a uniform linear antenna array, the preset position relationship comprises:
a first distance exists between the interference cancellation antenna and the transmit antenna, a second distance exists between the interference cancellation antenna and the receive antenna, and a difference between the first distance and the second distance is an odd number of half wavelengths of the transmitted signal.

4. The method according to claim 2, wherein when the signal transceiver device has a first transmit antenna, a second transmit antenna, and a receive antenna, and the first transmit antenna, the second transmit antenna, and the receive antenna constitute a uniform linear antenna array, the preset position relationship comprises:
the interference cancellation antenna is placed in an intersection of a first equiphase surface and a second equiphase surface, wherein a center of sphere of the first equiphase surface is the first transmit antenna, a radius of the first equiphase surface is a sum of a distance between the first transmit antenna and the receive antenna and an odd number of half wavelengths of the transmitted signal, a center of sphere of the second equiphase surface is the second transmit antenna, and a radius of the second equiphase surface is a sum of a distance between the second transmit antenna and the receive antenna and an odd number of half wavelengths of the transmitted signal.

5. The method according to claim 2, wherein when the signal transceiver device has a first transmit antenna, a second transmit antenna, a first receive antenna, and a second receive antenna, and the first transmit antenna, the second transmit antenna, the first receive antenna, and the second receive antenna constitute a uniform linear antenna array, the preset position relationship comprises:
a first interference cancellation antenna is placed in an intersection of a first equiphase surface and a second equiphase surface, wherein a center of sphere of the first equiphase surface is the first transmit antenna, a radius of the first equiphase surface is a sum of a distance between the first transmit antenna and the first receive antenna and an odd number of half wavelengths of the transmitted signal, a center of sphere of the second equiphase surface is the second transmit antenna, and a radius of the second equiphase surface is a sum of a distance between the second transmit antenna and the first receive antenna and an odd number of half wavelengths of the transmitted signal; and
a second interference cancellation antenna is placed in an intersection of a third equiphase surface and a fourth equiphase surface, wherein a center of sphere of the third equiphase surface is the first transmit antenna, a radius of the third equiphase surface is a sum of a distance between the first transmit antenna and the second receive antenna and an odd number of half wavelengths of the transmitted signal, a center of sphere of the fourth equiphase surface is the second transmit antenna, and a radius of the fourth equiphase surface is a sum of a distance between the second transmit antenna and the second receive antenna and an odd number of half wavelengths of the transmitted signal.

6. The method according to claim 2, wherein when the signal transceiver device has one receive antenna and one transmit antenna, the preset position relationship comprises:
the interference cancellation antenna and the receive antenna of the signal transceiver device constitute a cross polarization antenna.

7. The method according to claim 2, wherein when the signal transceiver device has a first transmit antenna, a second transmit antenna, a first receive antenna, and a second receive antenna, and the first transmit antenna and the second transmit antenna constitute a first cross polarization antenna, the preset position relationship comprises:
a first interference cancellation antenna and the first receive antenna constitute a second cross polarization antenna, and a second interference cancellation antenna and the second receive antenna constitute a third cross polarization antenna; and
an absolute value of a difference between a first distance and a second distance is an odd number of half wavelengths of the transmitted signal, wherein the first distance is a distance between a center of the first cross polarization antenna and a center of the second cross polarization antenna, and the second distance is a distance between the center of the first cross polarization antenna and a center of the third cross polarization antenna.

8. The method according to claim 1, wherein the converting, by a signal transceiver device, a first signal into an equi-amplitude phase-inverted signal of the first signal comprises:
delaying, by the signal transceiver device, the first signal by a preset time to form the equi-amplitude phase-inverted signal of the first signal, wherein the preset time is determined by dividing a distance value by a speed of light, and the distance value is a value of a distance between a transmit antenna of the signal transceiver device and a receive antenna of the signal transceiver device.

9. A signal restoration method, comprising:
transmitting, by a transmit end of a signal transceiver device, a signal in a first timeslot by using a transmit antenna, wherein a transmit party for a wanted signal does not transmit the wanted signal in the first timeslot;
receiving, by a receive end of the signal transceiver device, a reference signal formed after the transmitted signal is transmitted through an interference channel;
estimating, by the signal transceiver device, a model of the interference channel according to the reference signal;
reconstructing, by the signal transceiver device, a first signal according to the model of the interference channel, wherein the first signal is an interference signal that is formed from the signal transmitted by the transmit end of the signal transceiver device and that causes interference to the wanted signal; and
restoring, by the signal transceiver device by using the reconstructed first signal, the wanted signal from signals received by the receive end of the signal transceiver device.

10. The method according to claim 9, wherein the restoring, by the signal transceiver device by using the reconstructed first signal, the wanted signal from signals received by the receive end of the signal transceiver device comprises:
obtaining the wanted signal by subtracting the reconstructed first signal from the signals received by the receive end of the signal transceiver device.

11. A signal transceiver device, comprising:
a signal converter, configured to convert a first signal into an equi-amplitude phase-inverted signal of the first signal, wherein the first signal is an interference signal that is formed from a signal transmitted by a transmit end of the signal transceiver device and that causes interference to a wanted signal, and the wanted signal is a signal received by a receive end of the signal transceiver device if the transmit end of the signal transceiver device does not transmit a signal; and
a combiner unit, configured to restore, by using the equi-amplitude phase-inverted signal of the first signal, the wanted signal from signals received by the receive end of the signal transceiver device.

12. The signal transceiver device according to claim 11, wherein the signal converter comprises:
an interference cancellation antenna that constitutes a preset position relationship together with a receive antenna and a transmit signal of the signal transceiver device, configured to receive the first signal, wherein the preset position relationship makes the first signal become the equi-amplitude phase-inverted signal of the first signal after the first signal is received through the interference cancellation antenna.

13. The signal transceiver device according to claim 12, wherein if the signal transceiver device has one receive antenna and one transmit antenna, and the receive antenna and the transmit antenna constitute a uniform linear antenna array, a first distance exists between the interference cancellation antenna and the transmit antenna, a second distance exists between the interference cancellation antenna and the receive antenna, and a difference between the first distance and the second distance is an odd number of half wavelengths.

14. The signal transceiver device according to claim 12, wherein when the signal transceiver device has a first transmit antenna, a second transmit antenna, and a receive antenna, and the first transmit antenna, the second transmit antenna, and the receive antenna constitute a uniform linear antenna array, the interference cancellation antenna is placed in an intersection of a first equiphase surface and a second equiphase surface, wherein a center of sphere of the first equiphase surface is the first transmit antenna, a radius of the first equiphase surface is a sum of a distance between the first transmit antenna and the receive antenna and an odd number of half wavelengths of the transmitted signal, a center of sphere of the second equiphase surface is the second transmit antenna, and a radius of the second equiphase surface is a sum of a distance between the second transmit antenna and the receive antenna and an odd number of half wavelengths of the transmitted signal.

15. The signal transceiver device according to claim 12, wherein when the signal transceiver device has a first transmit antenna, a second transmit antenna, a first receive antenna, and a second receive antenna, and the first transmit antenna, the second transmit antenna, the first receive antenna, and the second receive antenna constitute a uniform linear antenna array, a first interference cancellation antenna is placed in an intersection of a first equiphase surface and a second equiphase surface, wherein a center of sphere of the first equiphase surface is the first transmit antenna, a radius of the first equiphase surface is a sum of a distance between the first transmit antenna and the receive antenna and an odd number of half wavelengths of the transmitted signal, a center of sphere of the second equiphase surface is the second transmit antenna, and a radius of the second equiphase surface is a sum of a distance between the second transmit antenna and the receive antenna and an odd number of half wavelengths of the transmitted signal; and
a second interference cancellation antenna is placed in an intersection of a third equiphase surface and a fourth equiphase surface, wherein a center of sphere of the third equiphase surface is the first transmit antenna, a radius of the third equiphase surface is a sum of a distance between the first transmit antenna and the second receive antenna and an odd number of half wavelengths of the transmitted signal, a center of sphere of the fourth equiphase surface is the second transmit antenna, and a radius of the fourth equiphase surface is a sum of a distance between the second transmit antenna and the second receive antenna and an odd number of half wavelengths of the transmitted signal.

16. The signal transceiver device according to claim 12, wherein when the signal transceiver device has one receive antenna and one transmit antenna, the interference cancellation antenna and the receive antenna of the signal transceiver device constitute a cross polarization antenna.

17. The signal transceiver device according to claim 12, wherein when the signal transceiver device has a first transmit antenna, a second transmit antenna, a first receive antenna, and a second receive antenna, and the first transmit antenna and the second transmit antenna constitute a first cross polarization antenna, a first interference cancellation antenna and the first receive antenna constitute a second cross polarization antenna, and a second interference cancellation antenna and the second receive antenna constitute a third cross polarization antenna; and
an absolute value of a difference between a first distance and a second distance is an odd number of half wavelengths of the transmitted signal, wherein the first distance is a distance between a center of the first cross polarization antenna and a center of the second cross polarization antenna, and the second distance is a distance between the center of the first cross polarization antenna and a center of the third cross polarization antenna.

18. The signal transceiver device according to claim 11, wherein the signal converter comprises:
a delayer, configured to delay the first signal by a preset time to form the equi-amplitude phase-inverted signal of the first signal, wherein the preset time is determined by dividing a distance value by a speed of light, and the distance value is a value of a distance between a transmit antenna of the signal transceiver device and a receive antenna of the signal transceiver device.

19. A signal transceiver device, comprising:
a transmit unit, transmitting a signal in a first timeslot by using a transmit antenna, wherein a transmit party for a wanted signal does not transmit the wanted signal in the first timeslot;
a channel model estimation unit, configured to receive a reference signal formed after the signal transmitted by using the transmit antenna is transmitted through an interference channel, and estimate a model of the interference channel according to the reference signal;
a reconstruction unit, configured to reconstruct a first signal according to the model of the interference channel, wherein the first signal is an interference signal that is formed from the signal transmitted by a transmit end of the signal transceiver device and that causes interference to the wanted signal; and
a restoration unit, configured to restore, by using the reconstructed first signal, the wanted signal from signals received by a receive end of the signal transceiver device.

20. The method according to claim 19, wherein that a restoration unit is configured to restore, by using the reconstructed first signal, the wanted signal from signals received by a receive end of the signal transceiver device comprises:
the restoration unit is specifically configured to obtain the wanted signal by subtracting the reconstructed first signal from the signals received by the receive end of the signal transceiver device.

21. A signal transceiver device, comprising:
a transmitter, configured to transmit a signal in a first timeslot by using a transmit antenna, wherein a transmit party for the wanted signal does not transmit the wanted signal in the first timeslot; and
a processor, configured to: receive a reference signal formed after the signal transmitted by using the transmit antenna is transmitted through an interference channel; estimate a model of the interference channel according to the reference signal; reconstruct a first signal according to the model of the interference channel, wherein the first signal is an interference signal that is formed from the signal transmitted by the signal transceiver device and that causes interference to the wanted signal; and restore, by using the reconstructed first signal, the wanted signal from signals received by a receive end of the signal transceiver device.
